# EUROPEAN PATENT APPLICATION

(11) **EP 4 546 711 A1**
(43) Date of publication of application: **30.04.2025**
(21) Application number: 23205919.6
(22) Date of filing: 25.10.2023
(51) Int. Cl.: H04L 9/40, H04W 4/02, H04W 4/021, H04W 4/30, H04W 12/08, H04W 12/64

(54) **SYSTEM AND METHOD OF GEOFENCING BASED LICENSE ON MOBILE DEVICES**

(71) Applicant: THALES DIS CPL USA, INC., Austin, TX 78759 (US)
(72) Inventor: ROHATGI, Amit, 110034 New Delhi (IN); SINHA, Amit Kumar, 201016 Uttar Pradesh (IN); BALI, Yogesh, 201014 Uttar Pradesh (IN); BATHAM, Tanmay, 201301 Uttar Pradesh (IN); VASHISHTH, Sakshi, 201301 Uttar Pradesh (IN)
(74) Representative: Lotaut, Yacine Diaw

(57) **Abstract**

A system (100) or method (400) for geofencing based licensing on a geographically enabled mobile device (102) includes receiving (402) a geofencing based license at the geographically enabled mobile device along with geographic data defining a geofence, activating (404) the geofencing based license on the geographically enabled mobile device using a device fingerprint and a location receiving device (106) in the geographically enabled mobile device, and obtaining (406) real time geographic data and providing the real time geographic data to a licensed application within the geographically enabled mobile device using the location receiving device in the geographically enabled mobile device. If the geographically enabled mobile device requests a protected function of the licensed application, the licensed application validates (408) the geofencing based license based on the real time geographic data and licensing terms using one or more processors (103), memory, and the location receiving device operatively coupled to the one or more processors.

## Description

### TECHNICAL FIELD

The present embodiments relate generally to rights management, licensing, and configuration of mobile devices based on geographical location of the mobile devices. More particularly, the system and method relate to an integrated geofencing based licensing technique for applications to block or grant access based, at least in part, on the applications geographical data.

### BACKGROUND

Existing licensing solutions can bind a particular device to a license but it may not take the device's geographical location into consideration. In other instances, the license management system is separate and apart from the geofencing.

Geofencing is a type of location-based function such as marketing and advertising. A mobile app or software uses the Global Positioning System (GPS), radio frequency identification (RFID), Wi-Fi or cellular data to define a virtual geographical boundary and trigger a targeted marketing action or other action when a device enters or exits that boundary. This boundary is known as a geofence.

Geofencing can also allow a user to set up triggers so that when a device such as an internet-connected smartphone enters a defined geographical boundary, the user gets an alert. They can also initiate some specific action targeting that device.

The virtual boundaries or geofences can be active or passive. Active geofences require an end user to opt in to location services and a mobile app to be open. Passive geofences are always on; they rely on Wi-Fi and cellular data, and work in the background.

Geofencing requires communication technologies such as GPS, RFID, Wi-Fi or cellular data. Once a geofence is set up, a preprogrammed action is automatically triggered when a mobile device or RFID tag enters or exits the geofence. A virtual boundary can be created around a geographical location as small as a building, store or mall, and as large as a ZIP code, city or entire state.

An administrator or developer first establishes a virtual boundary around a certain location in GPS- or RFID-enabled software. They can use polygonal geofencing software to identify points on a map. These points define the boundary where they want to capture people or devices. More commonly, geofences are defined by drawing a circle around the desired location using application programming interfaces, or APIs, created during app development. The circle represents the geofence that will trigger a response whenever an authorized device enters or exits that area. The response is preprogrammed by the administrator or developer.

Geofencing is commonly used as a marketing and advertising tactic to pull in more customers to a brick-and-mortar business, such as a store. For example, a business can send in-app notifications on its own app when a user who has that app on their device enters a geofenced area.

Geofencing has not been used with licensing applications for mobile devices. Some systems such as the one described in US Patent No. 6,985,588, granted on January 10, 2006 by Geodex LLC discusses a method and apparatus for controlling access to digital information utilizing a location identity attribute that defines a specific geographic location. The location identity attribute is enforced by allowing access to the digital information only at the specific geographic location. As a first part of this enforcement process, the location of an appliance through which access to the digital information is sought is identified. The appliance location is then compared to the specific geographic location defined by the location identity attribute, and access to the digital information is allowed only if the appliance location falls within the specific geographic location.

Another patent by Nokia Corporation, US Patent No. 8,230,087, granted on July 24, 2012 discusses enforcement of geographic and location based constraints on content distribution to allow distribution of content to remote devices while preventing unauthorized use and consumption of content.

U.S. Patent application No. 2006/0059096 by Microsoft Corporation published on March 16, 2006 similarly provides a method and system for location-based digital rights management. Digital rights for protected content are restricted to a specific location or region by specifying the approved location of the consuming device within the license. This allows the content owner to specify the geographic locations/regions at which the protected content may be consumed.

U.S. Patent application No. 2009/0217344 by IBM Corp also discusses determining whether any portion of content is subject to digital rights management protection specified for content captured, where captured content is content captured independent of distribution of the content by an owner of at least one restricted element within the captured content. In response to determining that a portion of the captured content is subject to digital rights management protection, a database is queried to select at least one digital rights management rule associated with the portion and including at least one location based criteria.

U.S. Patent application No. 2010/0197219 to Kota Enterprises, LLC discusses systems and methods relating to location-based applications, such as Widgets, are disclosed. In general, in one embodiment, a mobile device obtains a list of applications associated with a current or anticipated location of the mobile device from a centralized or distributed application service. One or more desired applications to be activated are either manually or automatically selected from the list of applications associated with the current location or the anticipated location of the mobile device. The mobile device then activates the one or more desired applications. Optionally, for each desired application that has been activated, the desired application may be deactivated once one or more deactivation criteria are satisfied. In addition to marketing and advertising, geofencing is also used for these real-world applications:
All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a system for geofencing based licensing on a geographically enabled mobile device can include a location receiving device in the geographically enabled mobile device, and one or more processors, memory, and the location receiving device operatively coupled to the one or more processors, where the memory includes computer instructions which when executed by the one or more processors causes the one or more processors to perform certain operations. The operations can include receiving a geofencing based license at the geographically enabled mobile device along with geographic data defining a geofence, activating the geofencing based license on the geographically enabled mobile device using a device fingerprint or device fingerprints, and obtaining real time geographic data and providing the real time geographic data to a licensed application within the geographically enabled mobile device. If the geographically enabled mobile device requests a protected function of the licensed application, the licensed application validates the geofencing based license based on the real time geographic data and licensing terms.

In some embodiments, the geographically enabled mobile device is one among a smartphone, a tablet, a laptop computer, or a smartwatch.

In some embodiments, the location receiving device in the geographically enabled mobile device is a GPS module.

In some embodiments, the location receiving device in the geographically enabled mobile device is an RFID module.

In some embodiments, the geographically enabled mobile device is enabled using location data from a GPS module or an RFID module within the geographically enabled mobile device.

In some embodiments, the geographically enabled mobile device is a mobile device within a vehicle, the licensed application is an advanced driver assistance system, and the protected function is one of a number of advanced driver assistance system features selected among lane assist, automated parking system, intelligent speed adaptation, or driver monitoring system.

In some embodiments, the licensed application is a camera scanner application that is enabled for only certain jurisdictions or countries.

In some embodiments, the licensed application is an office productivity application that is enabled for only certain jurisdictions or countries.

In some embodiments, a system for geofencing based licensing on a GPS enabled mobile device can include a GPS receiver in the GPS enabled mobile device, and one or more processors, memory, and the GPS receiver operatively coupled to the one or more processors, where the memory includes computer instructions which when executed by the one or more processors causes the one or more processors to perform certain operations. The operations can include receiving a geofencing based license at the GPS enabled mobile device along with geographic data defining a geofence, activating the geofencing based license on the GPS enabled mobile device using a device fingerprint, and obtaining real time GPS data and providing the real time GPS data to a licensed application within the GPS enabled mobile device. If the GPS enabled mobile device requests a protected function of the licensed application, the licensed application validates the geofencing based license based on the real time GPS data and licensing terms.

In some embodiments the GPS enabled mobile device is one among a smartphone, a tablet, a laptop computer, or a smartwatch.

In some embodiments, the GPS enabled mobile device is a mobile device within a vehicle, the licensed application is an advanced driver assistance system, and the protected function is one of a number of advanced driver assistance system features selected among lane assist, automated parking system, intelligent speed adaptation, or driver monitoring system.

In some embodiments, the licensed application is a camera scanner application that is enabled for only certain jurisdictions or countries.

In some embodiments, the licensed application is an office productivity application that is enabled for only certain jurisdictions or countries.

In some embodiments, a method for geofencing based licensing on a geographically enabled mobile device can include receiving a geofencing based license at the geographically enabled mobile device along with geographic data defining a geofence, activating the geofencing based license on the geographically enabled mobile device using a device fingerprint and a location receiving device in the geographically enabled mobile device, and obtaining real time geographic data and providing the real time geographic data to a licensed application within the geographically enabled mobile device using the location receiving device in the geographically enabled mobile device. In some embodiments, if the geographically enabled mobile device requests a protected function of the licensed application, the licensed application validates the geofencing based license based on the real time geographic data and licensing terms using one or more processors, memory, and the location receiving device operatively coupled to the one or more processors.

In some embodiments, the geographically enabled mobile device is one among a smartphone, a tablet, a laptop computer, or a smartwatch.

In some embodiments, the location receiving device in the geographically enabled mobile device is a GPS module.

In some embodiments, the location receiving device in the geographically enabled mobile device is an RFID module.

In some embodiments, the geographically enabled mobile device is enabled using location data from a GPS module or an RFID module within the geographically enabled mobile device.

In some embodiments, the geographically enabled mobile device is a mobile device within a vehicle, the licensed application is an advanced driver assistance system, and the protected function is one of a number of advanced driver assistance system features selected among lane assist, automated parking system, intelligent speed adaptation, or driver monitoring system.

In some embodiments, the licensed application is a camera scanner application that is enabled for only certain jurisdictions or countries or an office productivity application that is enabled for only certain jurisdictions or countries.

### BRIEF DESCRIPTION OF THE DRAWINGS

The accompanying drawings, which are incorporated in and constitute a part of this description, illustrate embodiments consistent with the embodiments and, together with the description, serve to explain the principles of the embodiments.
**FIG. 1** illustrates a block diagram of a mobile device, location tracking system, and license management system in accordance with the embodiments;
**FIG. 2** illustrates a flow chart of a method of geofencing based licensing on mobile devices in accordance with the embodiments;
**FIG.** 3 illustrates a flow chart of another method of geofencing based licensing on mobile devices in accordance with the embodiments; and
**FIG. 4** illustrates a flow chart of yet another method of geofencing based licensing on mobile devices in accordance with the embodiments.

Specific embodiments have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments. Instead, they are merely examples of apparatuses and methods consistent with aspects related to the embodiments as recited in the appended claims.

Existing licensing solutions can bind a particular device to a license, but it does not necessarily take into account the device's geographical location. In many instances, the methods of geofencing and licensing are separate and distinct aspects and not truly integrated.

Note that a smart phone is used as an example of a mobile device and that the embodiments shown are not limited to smart phones. Other mobile devices such as laptops, tablets, smart-watches, and other devices are contemplated within the scope of the claims.

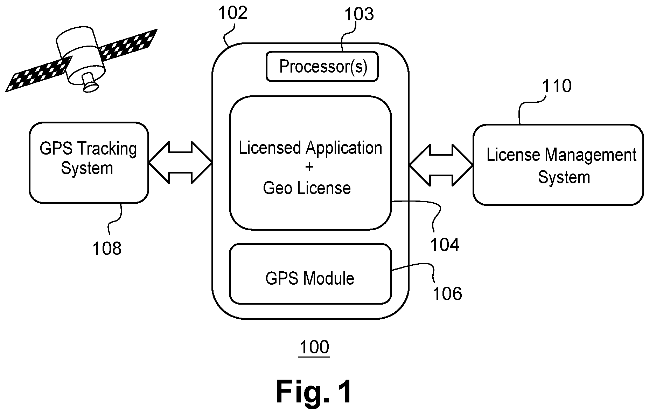

With reference to FIG. 1, a high-level block view of a system 100 in accordance with the embodiments includes a number of building blocks including a mobile device 102 having a licensed application and geographically based license 104, and a location module such as a GPS module 106. The mobile device 102 can receive GPS signals from a GPS tracking system 108. The mobile device 102 can also be operatively coupled to a license management system 110.

Generally, a method and system in accordance with some of the embodiments can include the following. 1. A license is generated and managed by a license management system for a geographically enabled device based on device fingerprints, geographic location data and other licensing terms. 2. The generated license along with the licensed application is installed on the geographically enabled device. 3. The licensed application then activates the license on geographically enabled device based on device fingerprints, GPS/RFID enabled modules and other licensing terms. 4. If the device requests the geographically protected feature, the licensed application gets the location of the device from the GPS module (or other location device) and validates the license based on geographical location data retrieved and based on other licensing terms. Note that the system does not require any network activity or connectivity with a license management system to validate/grant the license as this validation is done offline by the license application installed on the device based on license terms mentioned in the activated license. 5. The license management system may synchronize with the licensed application installed on geographical enabled device from time to time to update the geographic license activated on geographically enabled device. An update of the geographic license may include a change in license policy such as geographic coordinates and other licenses terms. 6. The license management system may also include monitoring and tracking of the geographically enabled device.

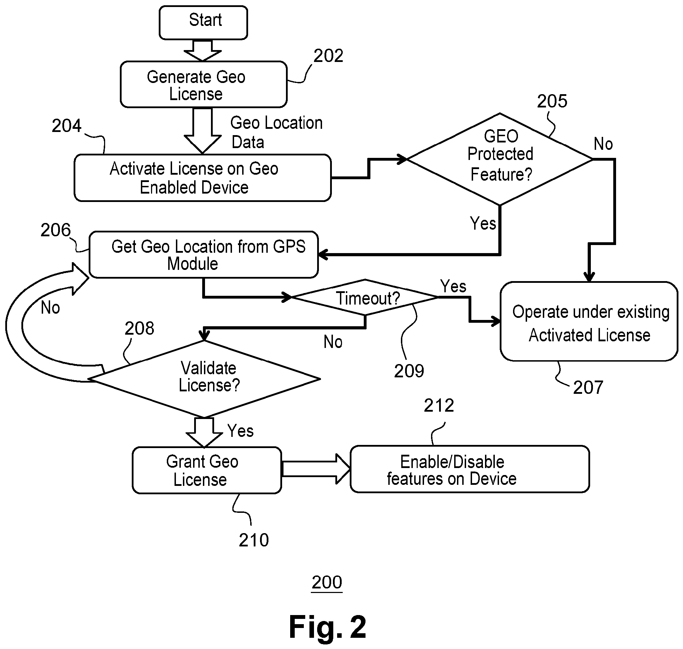

In some embodiments, with reference to FIG. 2, a method 200 for geofencing based licensing on a geographically enabled mobile device (102 as shown in FIG. 1) can include the steps of generating a license at step 202 for a geographically enabled device based on a device fingerprint and geographic data. Note, a device fingerprint can be a device ID or other device data or combination of attributes to identify a device. Examples of device data used for fingerprinting can include and are not limited to identifiers or data for a CPU processor, a graphics card, ram total, browser settings such as plugins and languages, operating system, timezone, browser type, and IP address among others. The Licensed application installed on the device activates the generated license on the geographically enabled device based on the device fingerprint at step 204. If the device requests a geographically protected feature at decision block 205, the application gets the location of device from GPS module at step 206 and validates the license at decision block 208 based on geographical location data retrieved at step 206 and based on other licensing terms, then the licensed application installed on geographically enabled device grants the license to the geographically protected feature(s) at steps 210 and 212 which can involve either enabling or disabling features at the device or both. If the device requests a feature that is not a geographically protected feature at decision block 205, then the mobile device will operate such feature under the existing activated license at step 207. Also, if the requested feature at decision block 205 is a protected feature and the device is not in the prescribed zone or location of the geofence, then the license will not be validated at decision block 208 and the method 200 will continue to attempt to get the geographic location data at step 206 until a valid license is granted at decision block 208 or a time out is achieved at decision block 209, in which case the device will just continue to operate under the existing activated license which may not likely allow the requested protect feature.

In some embodiments with reference again to FIG. 1, a system for geofencing based licensing on a geographically enabled mobile device 102 can include a location receiving device 106 in the geographically enabled mobile device, and one or more processors 103, memory, and the location receiving device 106 operatively coupled to the one or more processors, where the memory includes computer instructions which when executed by the one or more processors causes the one or more processors to perform certain operations.

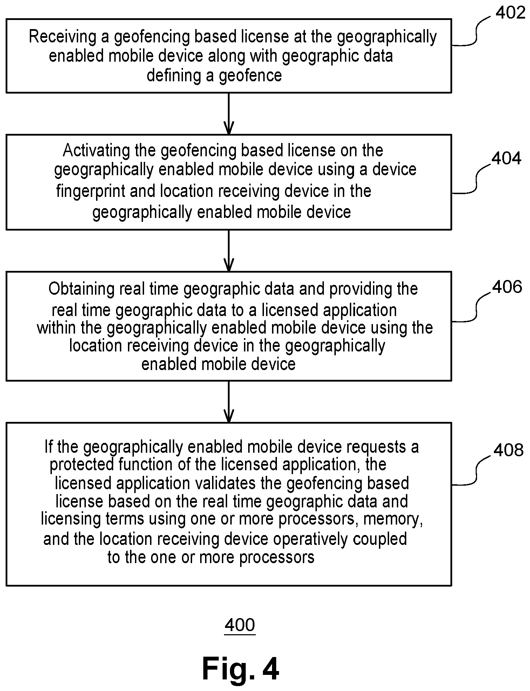

The operations with reference to FIG. 4 can include receiving at step 402 a geofencing based license at the geographically enabled mobile device along with geographic data defining a geofence, activating at step 404 the geofencing based license on the geographically enabled mobile device based on a device fingerprint, and obtaining at step 406 real time geographic data and providing the real time geographic data to a licensed application within the geographically enabled mobile device. At step 408, if the geographically enabled mobile device requests a protected function of the licensed application, the licensed application validates the geofencing based license based on the real time geographic data and licensing terms.

In some embodiments, the geographically enabled mobile device is one among a smartphone, a tablet, a laptop computer, or a smartwatch.

In some embodiments, the location receiving device in the geographically enabled mobile device is a GPS module. In some embodiments, the location receiving device in the geographically enabled mobile device is an RFID module.

In some embodiments, the geographically enabled mobile device is enabled using location data from a GPS module or an RFID module within the geographically enabled mobile device.

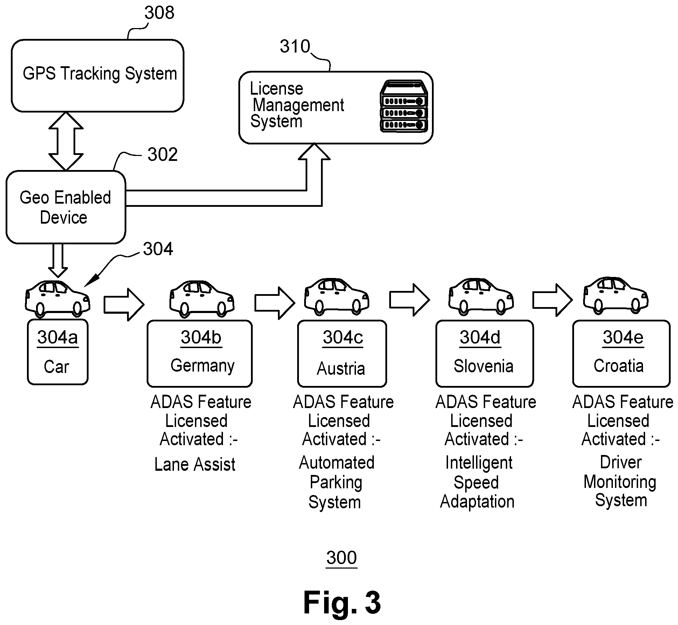

In some embodiments as illustrated in the system 300 of FIG. 3, the geographically enabled mobile device 302 is a mobile device within a vehicle 304 such as a car that is operatively coupled to a GPS tracking system 308 and a license management system 310, where the licensed application is an advanced driver assistance system having multiple and different geographically protected features or functions that may be validated in only certain locations (304a-304e) as shown. For example, the protected features or functions can be any one of a number or combination of advanced driver assistance system features selected among lane assist that might only be validated in one location such as Germany (304b), or automated parking system that might only be validated in another location such as Austria (304c), intelligent speed adaptation that might only be validated yet another location such as Slovenia (304d), or a driver monitoring system that might only be validated in Croatia (304e).

In some embodiments, the licensed application is a camera scanner application that is enabled for only certain jurisdictions or countries. In some embodiments, the licensed application is an office productivity application that is enabled for only certain jurisdictions or countries. For example, Microsoft Office or a portion of Office might be valid only in Europe for a particular license and such portions may require an integrated geofencing and license management system to achieve the desired result for enabling and disabling such features on a per country or region basis.

In some embodiments, a system can more particularly use GPS for geofencing based licensing on a GPS enabled mobile device that can include a GPS receiver in the GPS enabled mobile device, and one or more processors, memory, and the GPS receiver operatively coupled to the one or more processors, where the memory includes computer instructions which when executed by the one or more processors causes the one or more processors to perform certain operations. The operations as similarly shown in the method 400 of FIG. 4 can include receiving a geofencing based license at the GPS enabled mobile device along with geographic data defining a geofence, activating the geofencing based license on the GPS enabled mobile device based on a device fingerprint, and obtaining real time GPS data and providing the real time GPS data to a licensed application within the GPS enabled mobile device. If the GPS enabled mobile device requests a protected function of the licensed application, the licensed application validates the geofencing based license based on the real time GPS data and licensing terms.

In some embodiments the GPS enabled mobile device is one among a smartphone, a tablet, a laptop computer, or a smartwatch.

In some embodiments as previously shown in FIG. 3, the GPS enabled mobile device is a mobile device such as a cell phone or smartphone within a vehicle (automobile, motorcycle, bus, RV, truck, etc), the licensed application is an advanced driver assistance system, and the protected function is one of a number of advanced driver assistance system features selected among lane assist, automated parking system, intelligent speed adaptation, or driver monitoring system.

In some embodiments, the licensed application is a camera scanner application that is enabled for only certain jurisdictions or countries. For example, certain countries can restrict a particular social media application or a function within a social media application while allowing other functions within the application. If a camera scanner is considered offensive or intrusive of privacy rights in one jurisdiction, the embodiments can allow geofencing of the particular feature within the application while not totally disabling the remaining portions of the application.

In some embodiments, the licensed application is an office productivity application that is enabled for only certain jurisdictions or countries.

In some embodiments as previously discussed with respect to the flow chart of FIG. 4, a method 400 for geofencing based licensing on a geographically enabled mobile device can include receiving at 402 a geofencing based license at the geographically enabled mobile device along with geographic data defining a geofence, activating at 404 the geofencing based license on the geographically enabled mobile device using a device fingerprint and a location receiving device in the geographically enabled mobile device, and obtaining at 406 real time geographic data and providing the real time geographic data to a licensed application within the geographically enabled mobile device using the location receiving device in the geographically enabled mobile device. In some embodiments with reference to step 408, if the geographically enabled mobile device requests a protected function of the licensed application, the licensed application validates the geofencing based license (for the application or a particular feature or function of the application) based on the real time geographic data and licensing terms using one or more processors, memory, and the location receiving device operatively coupled to the one or more processors.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A system (100) for geofencing based licensing on a geographically enabled mobile device, comprising:
a location receiving device (106) in the geographically enabled mobile device (102);
one or more processors (103), memory, and the location receiving device operatively coupled to the one or more processors, wherein the memory includes computer instructions which when executed by the one or more processors causes the one or more processors to perform the operations of:
receiving (402) a geofencing based license (104) at the geographically enabled mobile device along with geographic data defining a geofence;
activating (404) the geofencing based license on the geographically enabled mobile device based on a device fingerprint;
obtaining (406) real time geographic data and providing the real time geographic data to a licensed application within the geographically enabled mobile device; and
if the geographically enabled mobile device requests a protected function of the licensed application, the licensed application validates (408) the geofencing based license based on the real time geographic data and licensing terms.

2. The system of claim 1, wherein the geographically enabled mobile device (102) is one among a smartphone, a tablet, a laptop computer, or a smartwatch.

3. The system of claim 1, wherein the location receiving device (106) in the geographically enabled mobile device is a GPS module.

4. The system of claim 1, wherein the location receiving device in the geographically enabled mobile device (102, 302) is an RFID module.

5. The system of claim 1, wherein the geographically enabled mobile device (102, 302) is enabled using location data from a GPS module or an RFID module within the geographically enabled mobile device.

6. The system of claim 1, wherein the geographically enabled mobile device (302) is a mobile device within a vehicle (304a-e), the licensed application is an advanced driver assistance system, and the protected function is one of a number of advanced driver assistance system features selected among lane assist, automated parking system, intelligent speed adaptation, or driver monitoring system.

7. The system of claim 1, wherein the licensed application (104) is a camera scanner application that is enabled for only certain jurisdictions or countries.

8. The system of claim 1, wherein the licensed application (104) is an office productivity application that is enabled for only certain jurisdictions or countries.

9. A system (100) for geofencing based licensing on a GPS enabled mobile device (102), comprising:
a GPS receiver (106) in the GPS enabled mobile device;
one or more processors (103), memory, and the GPS receiver operatively coupled to the one or more processors, wherein the memory includes computer instructions which when executed by the one or more processors causes the one or more processors to perform the operations of:
receiving (402) a geofencing based license at the GPS enabled mobile device along with geographic data defining a geofence;
activating (404) the geofencing based license on the GPS enabled mobile device based on a device fingerprint;
obtaining (406) real time GPS data and providing the real time GPS data to a licensed application within the GPS enabled mobile device; and
if the GPS enabled mobile device requests a protected function of the licensed application, the licensed application validates (408) the geofencing based license based on the real time GPS data and licensing terms.

10. The system of claim 9, wherein the GPS enabled mobile device ((102) is one among a smartphone, a tablet, a laptop computer, or a smartwatch.

11. The system of claim 9, wherein the GPS enabled mobile device is a mobile device (302) within a vehicle (304a-e), the licensed application is an advanced driver assistance system, and the protected function is one of a number of advanced driver assistance system features selected among lane assist, automated parking system, intelligent speed adaptation, or driver monitoring system.

12. The system of claim 9, wherein the licensed application (104) is a camera scanner application that is enabled for only certain jurisdictions or countries.

13. The system of claim 9, wherein the licensed application (104) is an office productivity application that is enabled for only certain jurisdictions or countries.

14. A method (400) for geofencing based licensing on a geographically enabled mobile device, comprising:
receiving (402) a geofencing based license at the geographically enabled mobile device along with geographic data defining a geofence;
activating (404) the geofencing based license on the geographically enabled mobile device using a device fingerprint and location receiving device in the geographically enabled mobile device;
obtaining (406) real time geographic data and providing the real time geographic data to a licensed application within the geographically enabled mobile device using the location receiving device in the geographically enabled mobile device; and
if the geographically enabled mobile device requests a protected function of the licensed application, the licensed application validates (408) the geofencing based license based on the real time geographic data and licensing terms using one or more processors, memory, and the location receiving device operatively coupled to the one or more processors.

15. The method of claim 14, wherein the geographically enabled mobile device (102) is one among a smartphone, a tablet, a laptop computer, or a smartwatch.

16. The method of claim 14, wherein the location receiving device (106) in the geographically enabled mobile device (102, 302) is a GPS module.

17. The method of claim 14, wherein the location receiving device in the geographically enabled mobile device (102, 302) is an RFID module.

18. The system of claim 14, wherein the geographically enabled mobile device (102, 302) is enabled using location data from a GPS module or an RFID module within the geographically enabled mobile device.

19. The system of claim 14, wherein the geographically enabled mobile device (302) is a mobile device within a vehicle (304a-e), the licensed application is an advanced driver assistance system, and the protected function is one of a number of advanced driver assistance system features selected among lane assist, automated parking system, intelligent speed adaptation, or driver monitoring system.

20. The system of claim 14, wherein the licensed application (104) is a camera scanner application that is enabled for only certain jurisdictions or countries or an office productivity application that is enabled for only certain jurisdictions or countries.
